# EUROPÄISCHE PATENTSCHRIFT

(11) **EP 1 243 882 B1**
(45) Veröffentlichungstag und Bekanntmachung des Hinweises auf die Patenterteilung: **07.07.2004**
(21) Anmeldenummer: 02005811.1
(22) Anmeldetag: 14.03.2002
(51) Int. Cl.: F25J 3/04

(54) **Argongewinnung mit einem Drei-Säulen-System zur Luftzerlegung und einer Rohargonsäule**
Production of argon using a triple pressure air separation system with an argon column
Production d'argon dans un système de séparation d'air à triple pression et une colonne d'argon

(30) Priorität: 21.03.2001 DE 10113791; 18.07.2001 EP 01117397
(43) Veröffentlichungstag der Anmeldung: 25.09.2002
(73) Patentinhaber: Linde Aktiengesellschaft, 65189 Wiesbaden (DE)
(72) Erfinder: Pompl, Gerhard, 92339 Beilngries (DE)
(74) Vertreter: Imhof, Dietmar

(56) Entgegenhaltungen:
- EP-A- 0 770 841
- EP-A- 1 094 286
- US-A- 4 433 989
- US-A- 4 854 954

## Beschreibung

Die Erfindung betrifft ein Verfahren zur Argongewinnung mit einem Drei-Säulen-System zur Luftzerlegung und einer Rohargonsäule. Dabei wird die Luft in einem Drei-Säulen-System destilliert, das eine Hochdrucksäule, eine Niederdrucksäule und eine Mitteldrucksäule aufweist. Die Mitteldrucksäule dient zur Auftrennung einer ersten sauerstoffangereicherten Fraktion aus der Hochdrucksäule, insbesondere zur. Erzeugung von Stickstoff, der in verflüssigter Form als Rücklauf in der Niederdrucksäule eingesetzt oder als Produkt abgezogen wird. Eine argonhaltige Fraktion aus dem Drei-Säulen-System, insbesondere aus der Niederdrucksäule, wird in eine Rohargonsäule eingeleitet, in der Sauerstoff und Argon voneinander getrennt werden.

Die Grundlagen der Tieftemperaturzerlegung von Luft im Allgemeinen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Bei dem Drei-Säulen-System bilden Hochdrucksäule und Niederdrucksäule vorzugsweise eine Linde-Doppelsäule, das heißt diese beiden Säulen stehen über einen Hauptkondensator in wärmetauschender Verbindung. (Die Erfindung ist jedoch grundsätzlich auch bei anderen Anordnungen von Hochdrucksäule und Niederdrucksäule und/oder anderen Kondensator-Konfigurationen anwendbar.) Im Gegensatz zum klassischen Linde-Zwei-Säulen-Prozess wird bei dem Drei-Säulen-Verfahren nicht die gesamte sauerstoffangereicherte Flüssigkeit, die in der Hochdrucksäule gebildet wird, direkt in die Niederdrucksäule eingeleitet, sondern eine erste sauerstoffangereicherte Fraktion aus der Hochdrucksäule strömt in die Mitteldrucksäule und wird dort weiter vorzerlegt, und zwar unter einem Druck, der zwischen den Betriebsdrücken von Hochdrucksäule und Niederdrucksäule liegt. Dabei wird in der Mitteldrucksäule aus der ersten sauerstoffangereicherten Fraktion Stickstoff ("zweites Stickstoff-Kopfgas") erzeugt, der verflüssigt und als zusätzlicher Rücklauf in dem Drei-Säulen-System verwendet und/oder als Flüssigprodukt gewonnen wird. Derartige Drei-Säulen-Prozesse sind beispielsweise aus DE 1065867 B, DE 2903089 A, US 5692395, oder EP 1043556 A bekannt.

Drei-Säulen-Systeme mit zusätzlicher Rohargonsäule sind zum Beispiel aus dem oben genannten Artikel von Latimer, aus US 4433989, EP 147460 A, EP 828123 A oder EP 831284 A bekannt.

In Ergänzung der vier genannten Säulen zur Stickstoff-Sauerstoff-Trennung und zur Sauerstoff-Argon-Trennung können weitere Trenneinrichtungen vorgesehen sein, beispielsweise eine Reinargonsäule zur Argon-Stickstoff-Trennung oder eine oder mehrere Säulen zur Krypton- und/oder Xenon-Gewinnung oder auch nicht-destillative Trenn- oder Nachreinigungsvorrichtungen.

Der Erfindung liegt die Aufgabe zugrunde, ein Verfahren beziehungsweise eine Vorrichtung zur Argongewinnung mit Drei-Säulen-System und Rohargonsäule anzugeben, das beziehungsweise die wirtschaftlich besonders günstig ist.

Diese Aufgabe wird dadurch gelöst, dass die Erzeugung von flüssigem Rücklauf für die Rohargonsäule und die Erzeugung aufsteigendem Dampf für die Mitteldrucksäule in einem einzigen Wärmeaustauschvorgang durchgeführt wird. Anders ausgedrückt wird der Rohargon-Kondensator gleichzeitig als Sumpfverdampfer der Mitteldrucksäule betrieben. Somit genügt ein einziger Kondensator-Verdampfer für beide Funktionen. Im Rahmen der Erfindung ist einerseits der apparative Aufwand besonders gering; andererseits ist das erfindungsgemäße Verfahren energetisch besonders günstig, beispielsweise durch die Verminderung der Austauschverluste.

In rückschauender Betrachtung könnte man auf den ersten Blick meinen, dass etwas Ähnliches bereits in WO 8911626 gezeigt sei, wo eine Doppelsäule mit Rohargonsäule gezeigt ist, wobei der Rohargonkondensator einen Stoffaustauschabschnitt im Umfang weniger theoretischer Böden aufweist. Dieser Stoffaustauschabschnitt wird jedoch unter demselben Druck wie die Niederdrucksäule betrieben und stellt schon aus diesem Grund keine Mitteldrucksäule im Sinne der Erfindung dar.

Vorzugsweise wird mindestens ein Teil des zweiten Stickstoff-Kopfgases aus der Mitteldrucksäule durch indirekten Wärmeaustausch mit einem Kühlfluid mindestens teilweise, vorzugsweise total kondensiert. Dabei erzeugter flüssiger Stickstoff kann als flüssiger Rücklauf in die Mitteldrucksäule zurückgeleitet werden; in diesem Fall erfüllt dieser indirekte Wärmeaustausch die Funktion eines Kopfkondensators der Mitteldrucksäule. Aus dem zweiten Stickstoff-Kopfgas gewonnenes Kondensat kann aber auch als Flüssigprodukt abgezogen und/oder als Rücklauf in der Niederdrucksäule eingesetzt werden. Als Kühlfluid für die Kondensation des zweiten Stickstoff-Kopfgases aus der Mitteldrucksäule kann grundsätzlich jede der bekannten Fraktionen eingesetzt werden, beispielsweise sauerstoffangereicherte Flüssigkeit aus der Hochdrucksäule, der Mitteldrucksäule oder der Niederdrucksäule.

Es ist günstig, wenn bei dem erfindungsgemäßen Verfahren der Rohargon-Kondensator als Fallfilmverdampfer ausgebildet ist. Dabei wird die zweite sauerstoffangereicherte Flüssigkeit aus der Mitteldrucksäule in dem Rohargon-Kondensator nur teilweise verdampft. Das resultierende Zwei-Phasen-Gemisch wird in eine Phasentrenneinrichtung eingeleitet, in der der sauerstoffangereicherte Dampf, und, ein flüssig verbliebener Anteil voneinander getrennt werden. Der sauerstoffangereicherte Dampf wird in die Mitteldrucksäule zurückgeleitet. Der flüssig verbliebene Anteil wird in die Niederdrucksäule eingeführt. Die Ausbildung des Rohargon-Kondensators als Fallfilmverdampfer bewirkt eine besonders geringe Temperaturdifferenz zwischen Verflüssigungs- und Verdampfungsraum. Diese Eigenschaft trägt zur Optimierung der Drücke bei, unter denen Rohargonsäule und Mitteldrucksäule betrieben werden.

Besonders günstig ist es jedoch, wenn ein zweiter Einsatzluftstrom verflüssigt und anschließend als Kühlfluid für die Kondensation des zweiten Stickstoff-Kopfgases aus der Mitteldrucksäule eingesetzt wird. Zwischen Verflüssigung und Einleitung in den entsprechenden Kondensator-Verdampfer wird keine Phasentrennung und keine andere konzentrationsverändernde Maßnahme vorgenommen. Diese Ausführungsform des erfindungsgemäßen Verfahrens ist insbesondere bei Anlagen mit starker Vorverflüssigung von Luft anwendbar, also bei hoher Flüssigproduktion und/oder Innenverdichtung. Bei einem Innenverdichtungs-Prozess wird mindestens eines der Produkte (zum Beispiel Stickstoff aus Hochdrucksäule und/oder Mitteldrucksäule, Sauerstoff aus Mitteldrucksäule und/oder Niederdrucksäule) flüssig aus einer der Säulen des Drei-Säulen-Systems oder aus einem mit einer dieser Säulen verbundenen Kondensator entnommen, in flüssigem Zustand auf einen erhöhten Druck gebracht, in indirektem Wärmeaustausch mit dem zweiten Einsatzluftstrom verdampft beziehungsweise (bei überkritischem Druck) pseudo-verdampft und schließlich als gasförmiges Druckprodukt gewonnen. Die dabei oder bei einem anschließenden Entspannungsschritt verflüssigte Luft wird dann als Kühlfluid verwendet. Der verdampfte zweite Einsatzluftstrom wird vorzugsweise in die Niederdrucksäule eingeleitet. Die benötigte Flüssigluft (der zweite Einsatzluftstrom) kann auch bei Flüssiganlagen ohne Innenverdichtung anfallen, zum Beispiel in einem Luftkreislauf.

Der zweite Einsatzluftstrom kann stromaufwärts seiner Verwendung als Kühlfluid arbeitsleistend entspannt werden. Er wird dazu in flüssigem oder überkritischem Zustand in eine Flüssigturbine eingeleitet, aus der,er in vollständig flüssigem oder in im Wesentlichen vollständig flüssigem Zustand wieder austritt.

Alternativ zu einem zweiten Einsatzluftstrom kann eine Flüssigkeit aus der Hochdrucksäule, insbesondere eine Flüssigkeit von einer Zwischenstelle der Hochdrucksäule, als Kühlfluid für die Kondensation des zweiten Stickstoff-Kopfgases aus der Mitteldrucksäule eingesetzt werden. Durch die Entnahme des Kühlfluids von einer Zwischenstelle kann dessen Konzentration gezielt ausgewählt und damit die Verdampfungstemperatur bei dem indirekten Wärmeaustausch mit dem kondensierenden Mitteldrucksäulen-Stickstoff optimal eingestellt werden. Diese Einstellmöglichkeit ist besonders vorteilhaft, da bei dem erfindungsgemäßen Verfahren sowohl der Betriebsdruck der Mitteldrucksäule (über die Wärmeaustauschbeziehung zur Rohargonsäule) als auch der Druck des verdampfenden Kühlfluids (mindestens Atmosphärendruck bzw. Niederdrucksäulen-Druck) nur in engen Grenzen variiert werden kann.

Vorzugsweise weist die Mitteldrucksäule oberhalb der Zuspeisung der ersten sauerstoffangereicherten Fraktion Stoffaustauschelemente im Umfang von mindestens sieben theoretischen Böden, auf. Beispielsweise beträgt theoretische Bodenzahl oberhalb der Zuspeisestelle 7 bis 50, vorzugsweise 16 bis 22 theoretische Böden.

Die Mitteldrucksäule weist unterhalb der Zuspeisung der ersten sauerstoffangereicherten Fraktion keine Stoffaustauschelemente oder Stoffaustauschelemente im Umfang von zum Beispiel einem bis fünf theoretischen Böden auf.

In vielen Fällen ist es günstig, der Mitteldrucksäule eine zweite Einsatzfraktion zuzuführen. Dazu wird eine Zusatzfraktion, die eine andere Zusammensetzung als die erste sauerstoffangereicherten Fraktion aufweist, aus der Hochdrucksäule abgezogen und der Mitteldrucksäule zugespeist. Falls eine Zwischenflüssigkeit aus der Hochdrucksäule als Kühlfluid eingesetzt wird, kann ein Teil abgezweigt und der Mitteldrucksäule als weitere Einsatzfraktion zugeführt werden. Die erste Einsatzfraktion der Mitteldrucksäule (erste sauerstoffangereicherte Fraktion) wird in diesem Fall beispielsweise durch Sumpfflüssigkeit der Hochdrucksäule gebildet.

Die Erfindung betrifft außerdem eine Vorrichtung zur Argongewinnung gemäß Patentanspruch 9. Vorteilhafte Ausgestaltungen sind in den Patentansprüchen 10 bis 13 beschrieben.

Die Erfindung sowie weitere Einzelheiten der Erfindung werden im Folgenden anhand von in den Zeichnungen dargestellten Ausführungsbeispielen näher erläutert.

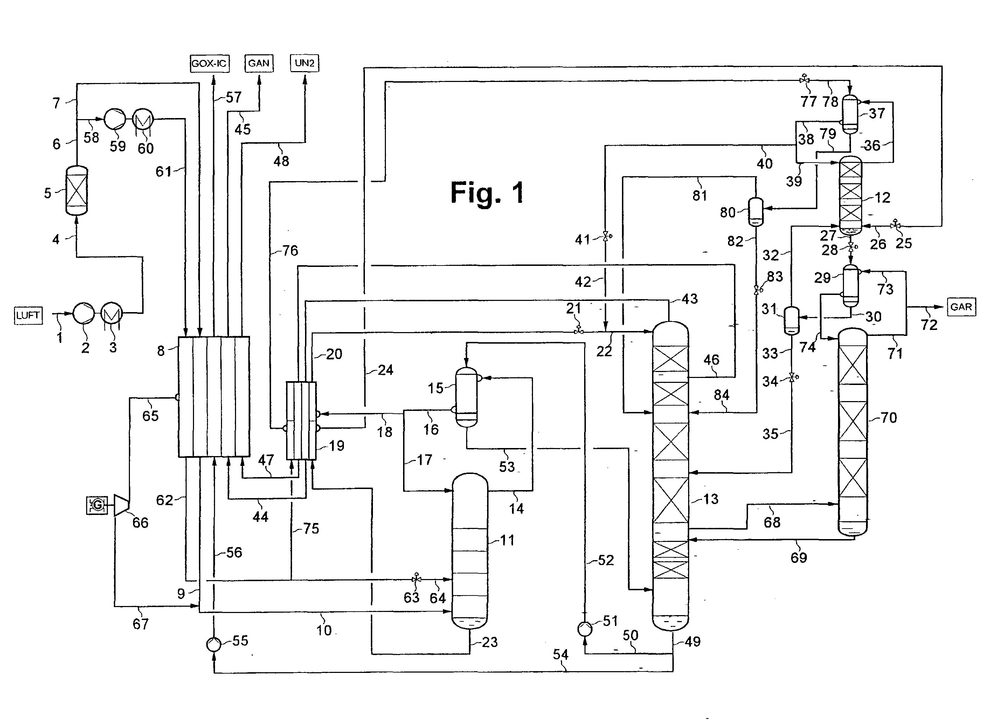

Bei dem in **Figur 1** dargestellten System wird atmosphärische Luft 1 in einem Luftverdichter 2 mit Nachkühlung 3 verdichtet. Die verdichtete Einsatzluft 4 wird einer Reinigungseinrichtung 5 zugeführt, die beispielsweise durch ein Paar von Molekularsieb-Adsorbem gebildet wird. Ein erster Teil 7 der gereinigten Luft 6 wird in einem Hauptwärmetauscher 8 auf etwa Taupunkt abgekühlt. Der abgekühlte erste Teil 9 der Luft wird mit einem anderen gasförmigen Luftstrom 67 vermischt. Das Gemisch bildet in dem Ausführungsbeispiel den "ersten Einsatzluftstrom", der über Leitung 10 ohne Drosselung der Hochdrucksäule 11 eines Drei-Säulen-Systems zugeführt wird. Das Drei-Säulen-System weist außerdem eine Mitteldrucksäule 12 und eine Niederdrucksäule 13 auf.

In dem Beispiel wird das gesamte Kopfprodukt der Hochdrucksäule 11 ("erstes Stickstoff-Kopfgas") über Leitung 14 in einen Hauptkondensator 15 geleitet und dort vollständig oder im Wesentlichen vollständig kondensiert. Dabei gebildeter flüssiger Stickstoff 16 wird zu einem ersten Teil 17 der Hochdrucksäule 11 als Rücklauf aufgegeben. Ein zweiter Teil 18 wird in einem Unterkühlungs-Gegenströmer 19 abgekühlt und über Leitung 20, Drosselventil 21 und Leitung 22 zum Kopf der Niederdrucksäule 13 geführt.

Im Sumpf der Hochdrucksäule 11 fällt eine erste sauerstoffangereicherte Flüssigkeit an, die über Leitung 23, Unterkühlungs-Gegenströmer 19, Leitung 24, Drosselventil 25 und Leitung 26 als "erste sauerstoffangereicherte Fraktion" in die Mitteldrucksäule 12 eingespeist wird. In dem Beispiel weist die Mitteldrucksäule 12 keine Stoffaustauschelemente unterhalb, der Zuspeisung der ersten sauerstoffangereicherten Fraktion 26 auf; die Stoffaustauschelemente oberhalb der Zuspeisung werden durch geordnete Packung gebildet, die insgesamt 22 theoretischen Böden entspricht.

Das Sumpfprodukt der Mitteldrucksäule ("zweite sauerstoffangereicherte Flüssigkeit") wird über Leitung 27 und Regelventil 28 in den Verdampfungsraum eines Rohargon-Kondensators 29 geleitet, und dort teilweise verdampft. Das dabei gebildete Zwei-Phasen-Gemisch 30 wird in einen Abscheider (Phasentrenner) 31 eingeführt. Der dampfförmige Anteil 32 strömt als "sauerstoffangereicherter Dampf" zurück in die Mitteldrucksäule 12 und dient dort als aufsteigender Dampf. Die verbliebene Flüssigkeit 33 wird abgedrosselt (34) und der Niederdrucksäule 13 als sauerstoffangereicherter Einsatz 35 zugespeist.

Das zweite Stickstoff-Kopfgas, das sich am Kopf der Mitteldrucksäule 12 bildet, wird in dem Beispiel vollständig über Leitung 36 entnommen und im Verflüssigungsraum eines Mitteldrucksäulen-Kopfkondensators 37 vollständig kondensiert. Dabei gebildeter flüssiger Stickstoff 38 wird zu einem ersten Teil 39 der Mitteldrucksäule 12 als Rücklauf aufgegeben. Ein zweiter Teil 40 wird über Drosselventil 41 und Leitungen 42-22 zum Kopf der Niederdrucksäule 13 geführt und/oder wird direkt als Flüssigprodukt gewonnen (nicht dargestellt). '

Dem oberen Bereich der Niederdrucksäule 13 werden gasförmiger Stickstoff 43-44-45 und Unrein-Stickstoff 46-47-48 entnommen, im Unterkühlungs-Gegenströmer 19 und im Hauptwärmetauscher 8 angewärmt und als Produkt (GAN) beziehungsweise Restgas (UN2) abgezogen.

Flüssiger Sauerstoff 49 aus dem Sumpf der Niederdrucksäule 13 wird zu einem ersten Teil 50-52 mittels einer Pumpe 51 in den Verdampfungsraum des Hauptkondensators 15 gefördert und dort teilweise verdampft. Das dabei entstehende Zwei-Phasen-Gemisch wird in den Sumpf der Niederdrucksäule 13 zurückgeleitet. Der Rest 54 der Niederdrucksäulen-Sumpfflüssigkeit 49 wird in einer Innenverdichtungspumpe 55 auf den gewünschten Produktdruck gebracht, über Leitung 56 dem Hauptwärmetauscher 8 zugeführt, dort verdampft oder pseudo-verdampft und angewärmt und schließlich über Leitung 57 als gasförmiges Druckprodukt (GOX-IC) herausgeführt. Mittels der Innenverdichtung ist jeder gewünschte Produktdruck erreichbar. Er kann beispielsweise zwischen 3 und 120 bar liegen.

Die Wärme, die für die (Pseudo-)Verdampfung des innenverdichteten Sauerstoffs 56 benötigt wird, stellt ein zweiter Teil 62 der Einsatzluft zu Verfügung, der über Leitung 58 aus der gereinigten Einsatzluft 6 abgezweigt, in einem Nachverdichter 59 mit Nachkühler 60 auf den dafür benötigten hohen Druck gebracht und über Leitung 61 dem Hauptwärmetauscher 8 zugeführt wird. Der zweite Teil 62 der Einsatzluft wird mindestens teilweise als "zweiter Einsatzluftstrom" über Leitung 75, UnterkühlungsGegenströmer 19, Leitung 76, Drosselventil 77 und Leitung 78 in den Verdampfungsraum des Kopfkondensators 37 der Mitteldrucksäule eingeleitet, ohne, vorher einer Phasentrennung oder einer anderen konzentrationsverändernden Maßnahme unterworfen zu werden. Im Mitteldrucksäulen-Kondensator 37 wird er teilweise verdampft. Das dabei gebildete Zwei-Phasen-Gemisch 79 wird in einen Abscheider (Phasentrenner) 80 eingeführt. Der dampfförmige Anteil 81 strömt in die Niederdrucksäule 13. Die verbliebene Flüssigkeit 82 wird über ein Ventil 83 ebenfalls der Niederdrucksäule 13 zugespeist (84). Die Zuspeisestelle liegt unterhalb des Unrein-Stickstoff-Abzugs 46 und oberhalb der Zuspeisung 35 der Mitteldrucksäulen-Sumpfflüssigkeit.

Der Rest der tiefkalten Hochdruckluft 62 wird auf Hochdrucksäulen-Druck abgedrosselt (63) und über Leitung 64 in die Hochdrucksäule 11 eingeleitet. Die Zuspeisestelle liegt vorzugsweise einige theoretische Böden oberhalb des Sumpfs, an dem die gasförmige Luft 10 eingeführt wird.

Ein Teil 65 der gereinigten Einsatzluft 6 wird gemeinsam mit dem zweiten Teil 62 nachverdichtet und in den Hauptwärmetauscher 8 eingeführt (58-59-60-61), dann aber bei einer Zwischentemperatur wieder entnommen und einer Entspannungsmaschine 66 zugeführt, die in dem Beispiel als Generator-Turbine ausgestaltet ist. Der arbeitsleistend entspannte dritte Teil 67 der Einsatzluft wird gemeinsam mit dem ersten Teil 9 als "erster Einsatzluftstrom" 10 zur Hochdrucksäule 11 geleitet.

Die Niederdrucksäule 13 kommuniziert über eine Gasleitung 68 und eine Flüssigkeitsleitung 69 mit einer Rohargonsäule 70. Über 68 wird eine argonhaltige Fraktion gasförmig in die Rohargonsäule eingeführt und dort in eine Rohargon-Kopffraktion und eine sauerstoffreiche Flüssigkeit im Sumpf getrennt. In dem Beispiel wird ein erster Teil 72 der gasförmigen Rohargon-Kopffraktion 71 als Rohargon- , Produkt (GAR) gewonnen. Es kann gegebenenfalls weiter gereinigt werden, beispielsweise in einer Reinargonsäule (nicht dargestellt). Der Rest 73 wird im Rohargon-Kondensator 29 vollständig oder im Wesentlichen vollständig verflüssigt und über Leitung 74 als Rücklauf auf den Kopf der Rohargonsäule 70 aufgegeben.

Alle drei Kondensator-Verdampfer 15, 29, 37 sind in dem Beispiel als Fallfilmverdampfer ausgebildet. Jeder kann im Rahmen der Erfindung jedoch auch durch einen anderen Verdampfer-Typ realisiert werden, beispielsweise einen Umlaufverdampfer (Thermosiphon-Verdampfer). Wenn beispielsweise der Rohargon-Kondensator als Umlaufverdampfer ausgestaltet wird, kann er unmittelbar im Sumpf der Mitteldrucksäule 12 angeordnet werden. Rohargonsäule 70 und Mitteldrucksäule 12 könnten damit auch apparativ als Doppelsäule angeordnet werden und beispielsweise in einem gemeinsamen Behälter untergebracht sein.

Im Rahmen der Erfindung ist es allerdings meist vorteilhafter, gerade an dieser Stelle einen Fallfilmverdampfer einzusetzen und dessen geringe Temperaturdifferenz zur Optimierung der Säulendrücke auszunutzen. Wenn Niederdrucksäule 13, Mitteldrucksäule 12, Rohargon-Kondensator 29 und Rohargonsäule 70 wie in der Zeichnung dargestellt übereinander angeordnet sind, kann sogar die ansonsten bei Fallfilmverdampfem erforderliche Umwälzpumpe (siehe Pumpe 51 für den Hauptkondensator 15) entfallen. Die Flüssigkeit fließt allein aufgrund des statischen Drucks über die Leitungen 27, 30, 33, 35 aus der Mitteldrucksäule 12 über Rohargon-Kondensator 29 in die Niederdrucksäule 13. Auch auf der Verflüssigungsseite wird keine Pumpe benötigt.

Die Betriebsdrücke der Säulen (jeweils am Kopf) betragen:

| | |
|---|---|
| Hochdrucksäule 11 | beispielsweise 4 bis 12 bar, vorzugsweise etwa 6 bar |
| Mitteldrucksäule 12 | beispielsweise 1,2 bis 2 bar, vorzugsweise etwa 1,4 bar |
| Niederdrucksäule 13 | beispielsweise 1,2 bis 2 bar, vorzugsweise etwa 1,6 bar |

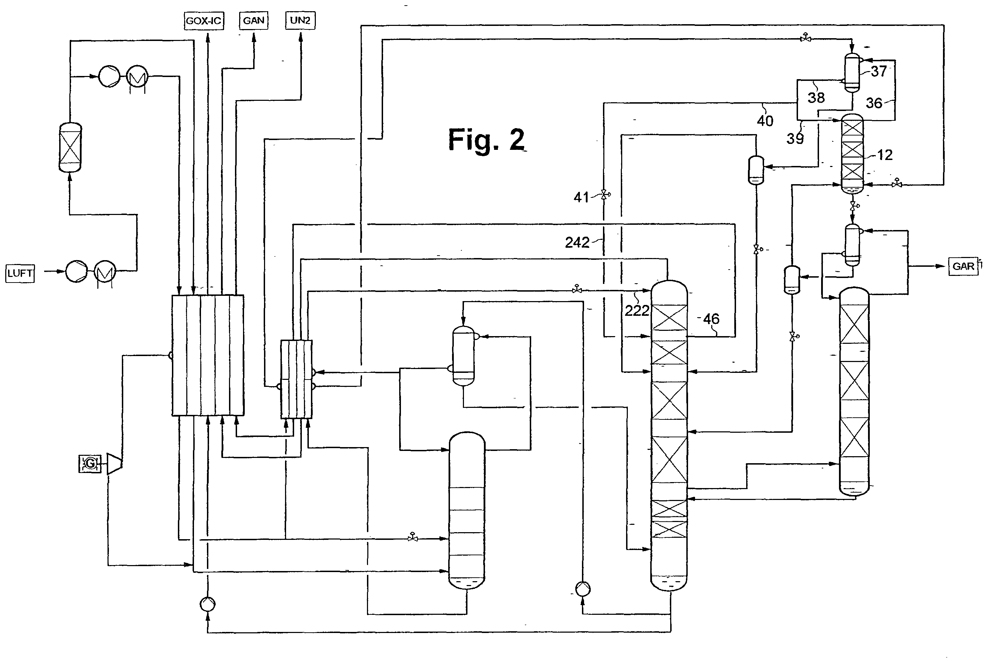

Im Prozess von **Figur 2** weist die Mitteldrucksäule 12 weniger theoretische Böden auf, beispielweise 12 . Das Kopfprodukt 36 und die im Kopfkondensator 37 der Mitteldrucksäule gebildete Flüssigkeit 38, 39, 40 weisen daher eine geringerer Reinheit auf als der Stickstoff aus der Hochdrucksäule beziehungsweise dem Hauptkondensator, der über Leitung 222 auf den Kopf der Niederdrucksäule aufgegeben wird. Der in 41 gedrosselte flüssige Mitteldrucksäulen-Stickstoff 242 wird daher an einer Zwischenstelle in die Niederdrucksäule eingeführt, in dem dargestellten Beispiel etwa auf Höhe der Entnahme des Unrein-Stickstoffs.

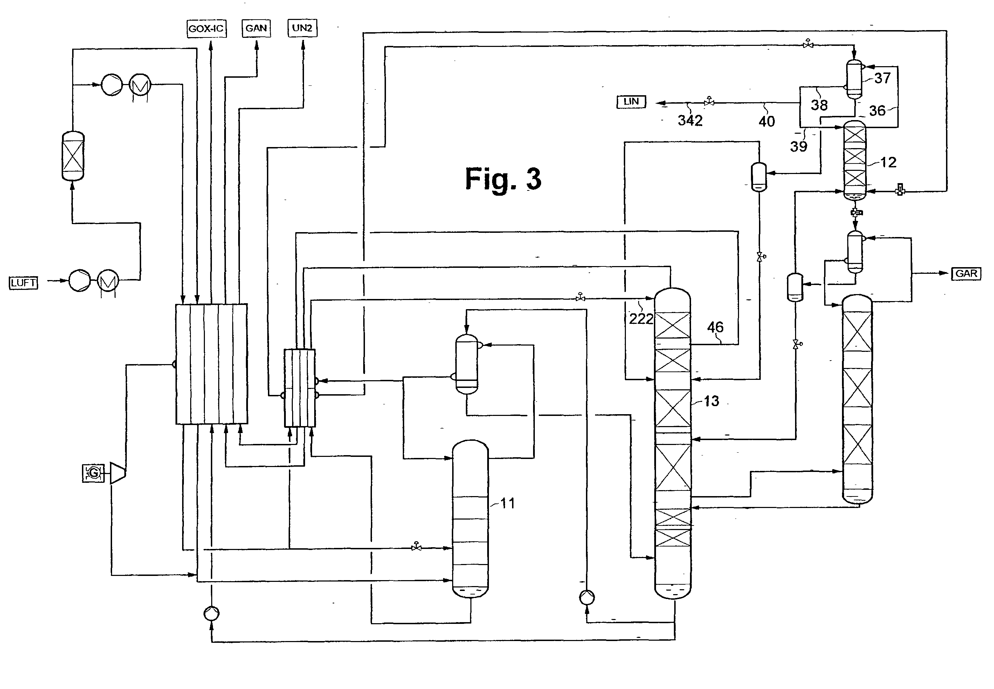

In **Figur 3** wird der gesamte Mitteldrucksäulen-Stickstoff 40, der nicht als Rücklauf 39 in der Mitteldrucksäule 12 eingesetzt wird, als Flüssigprodukt (LIN) über Leitung 342 abgezogen. Die Bodenzahl in der Mitteldrucksäule 12 kann damit auf die Produktanforderung ausgerichtet werden. Da kein Mitteldrucksäulen-Stickstoff in die, Niederdrucksäule eingeleitet wird, kann die Produktreinheit in der Mitteldrucksäule unabhängig von den Konzentrationen der Kopffraktionen in Hochdrucksäule 11 und Niederdrucksäule 13 ausgelegt werden. Umgekehrt werden die Produkte der Niederdrucksäule nicht von etwaigen Schwankungen im Betrieb der Mitteldrucksäule beeinflusst.

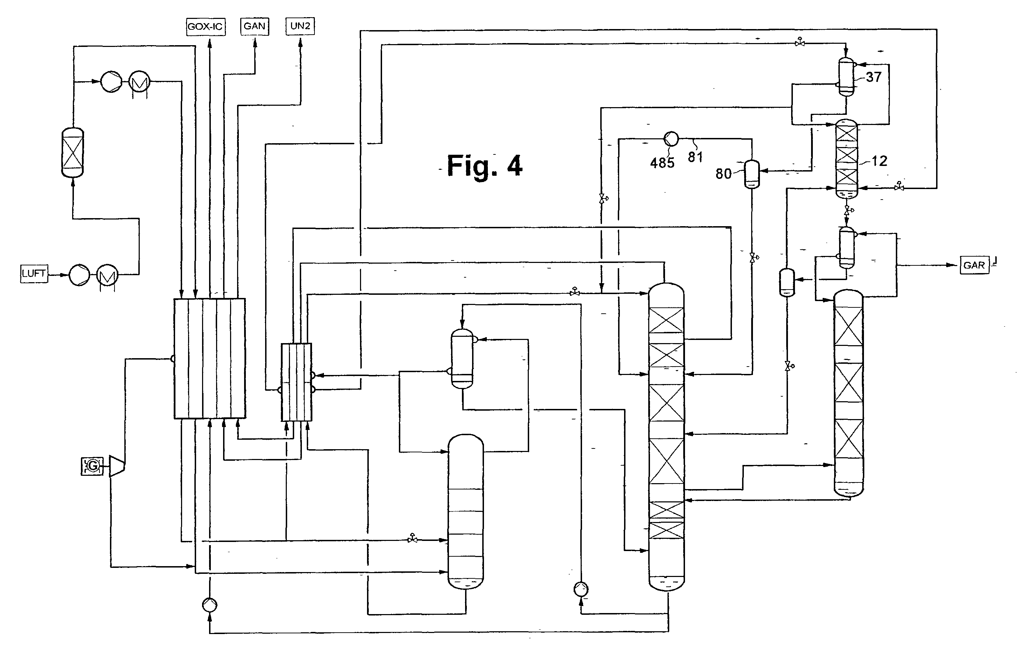

Aufgrund der Temperatur- und Druckdifferenzen und der Konzentrationen kann der Druck auf der Verdampfungsseite des Kopfkondensators 37 der Mitteldrucksäule 12 niedriger als der Betriebsdruck der Niederdrucksäule 13 sein. In diesem Fall kann die Kondensator-Konfiguration von Figur 2 dennoch eingesetzt werden, wenn der Dampf 81 aus dem Abscheider 80 mittels eines Kaltgebläses 485 in die Niederdrucksäule gedrückt wird, wie es in **Figur 4** dargestellt ist.

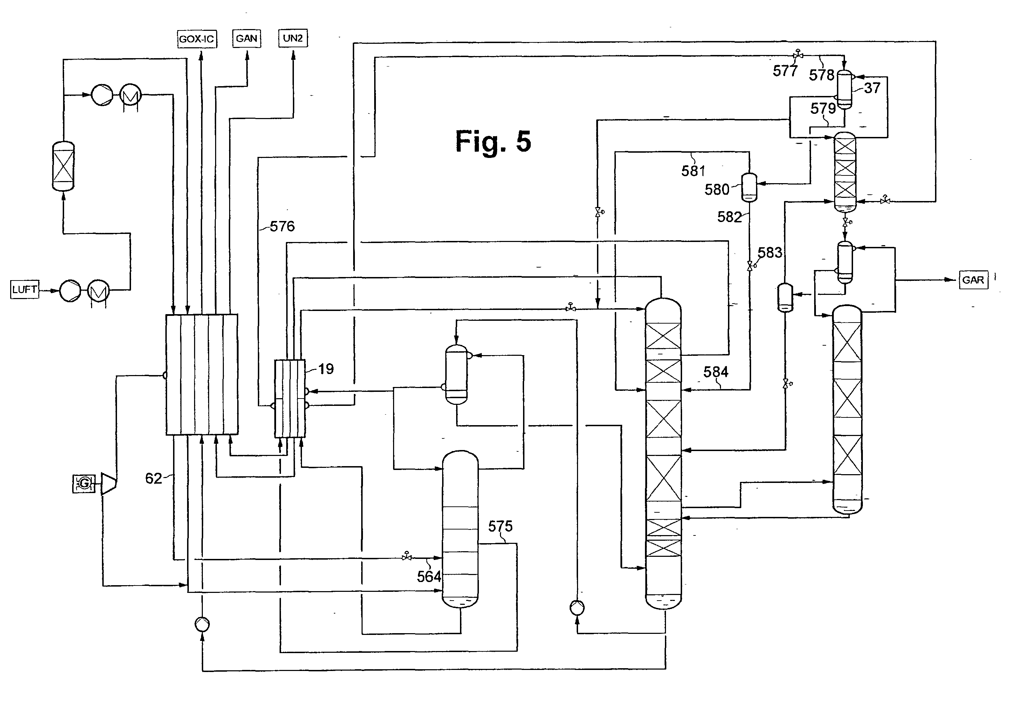

Das Ausführungsbeispiel von **Figur 5** stellt eine andere Abwandlung des Verfahrens nach Figur 1 dar. Hier wird die gesamte tiefkalte Hochdruckluft über Leitung 564 in die Hochdrucksäule eingeführt. Das Kühlfluid für den Kopfkondensator 37 der Mitteldrucksäule wird durch eine Zwischenflüssigkeit 575 der Hochdrucksäule gebildet, die über den Unterkühlungs-Gegenströmer 19, Leitung 576, Drosselventil 577 und Leitung 578 herangeführt wird. Die Stromführung stromabwärts des Verdampfungsraums des Kopfkondensators 37 (579 bis 584) ist analog zu Figur 1. Die Zwischenflüssigkeit 575 wird in dem Beispiel etwas oberhalb der Zuspeisung der Flüssigluft 564 abgenommen. Vorzugsweise liegen etwa 2 bis 10 theoretische Böden zwischen den beiden Anstichen. Alternativ ist eine Entnahme auf Höhe der Flüssigluftzuspeisung oder etwas darunter möglich.

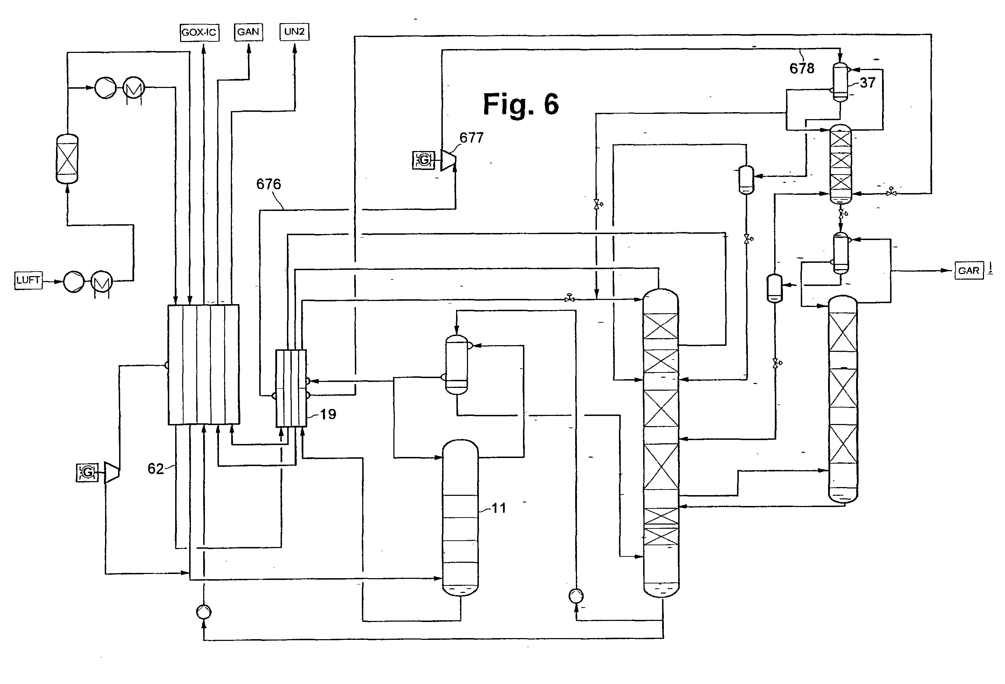

In Figur 6 wird der zweite Einsatzluftstrom 676 vor der Einleitung 678 in den Verdampfungsraum des Kopfkondensators 37 der Mitteldrucksäule nicht über ein Drosselventil (77 in Figur 1) entspannt, sondern in einer Flüssigturbine 677. Die dabei geleistete Arbeit wird In dem dargestellten Beispiel mittels eines Generators in elektrische Energie umgewandelt. In dem Ausführungsbeispiel von Figur 6 wird die gesamte tiefkalte Hochdruckluft 62 in die Flüssigturbine 677 und weiter zum Kopfkondensator 37 geleitet. Es strömt,keine Flüssigluft in die Hochdrucksäule 11.

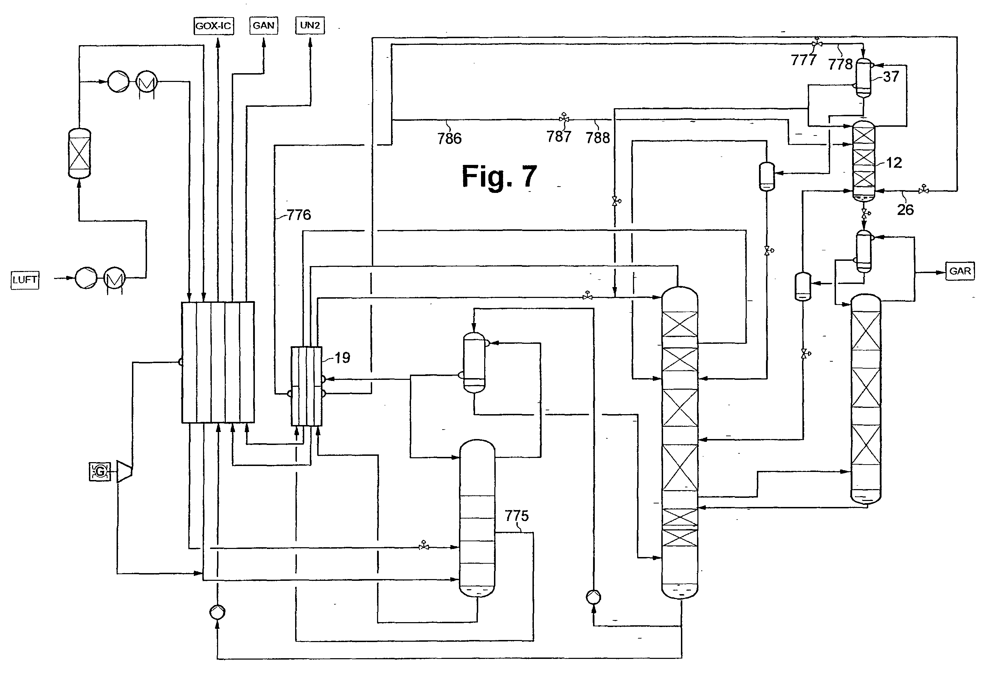

Im Unterschied zu Figur 5 wird bei dem in Figur 7 dargestellten Verfahren nicht die gesamte Zwischenflüssigkeit 775, 776 aus der Hochdrucksäule, über 777-778 in den Verdampfungsraum des Kopfkondensators 37 der Mitteldrucksäule geführt. Vielmehr strömt ein Teil 786-787-788 als "Zusatzfraktion" ins Innere der Mitteldrucksäule 12. Die Einspeisestelle der weiteren Einsatzfraktion 788 liegt oberhalb der Zuspeisung 26 der Hochdrucksäulen-Sumpfflüssigkeit. Alternativ kann die gesamte Zwischenflüssigkeit 775, 776 in die Mitteldrucksäule 12 eingeleitet (788) werden. Das Kühlfluid für den Mitteldrucksäulen-Kopfkondensator 37 wird dann durch ein anderes Fluid gebildet, beispielsweise durch verflüssigte Einsatzluft (siehe z.B. Figur 1), durch Hochdrucksäulen-Sumpfflüssigkeit, durch Flüssigkeit von einer anderen Zwischenstelle der Hochdrucksäule oder durch eine sauerstoffangereicherte Flüssigkeit aus Mitteldrucksäule oder Niederdrucksäule.

Wie für den Fachmann unmittelbar ersichtlich ist, sind im Rahmen der Erfindung weitere Kombinationen der in den Ausführungsbeispielen geschilderten Einzelmerkmale möglich.

## Patentansprüche

1. Verfahren zur Argongewinnung mit einem Drei-Säulen-System zur Luftzerlegung, das eine Hochdrucksäule (11), eine Niederdrucksäule (13) und eine Mitteldrucksäule (12) aufweist, wobei bei dem Verfahren
(a) ein erster Einsatzluftstrom (10, 64, 564) in die Hochdrucksäule (11) eingeleitet und dort in eine erste sauerstoffangereicherte Flüssigkeit und eine erstes Stickstoff-Kopfgas getrennt wird,
(b) eine erste sauerstoffangereicherte Fraktion (23, 24, 26) aus der Hochdrucksäule (11) in die Mitteldrucksäule (12) eingeleitet und dort in eine zweite sauerstoffangereicherte Flüssigkeit und ein zweites Stickstoff-Kopfgas getrennt wird,
(c) mindestens ein Teil (36) des zweiten Stickstoff-Kopfgases aus der Mitteldrucksäule (12) durch indirekten Wärmeaustausch (37) mit einem Kühlfluid (78, 678, 778) mindestens teilweise kondensiert wird,
(d) eine zweite sauerstoffangereicherte Fraktion (33, 35) aus der Hochdrucksäule und/oder aus der Mitteldrucksäule (12) in die Niederdrucksäule (13) eingeleitet und dort in eine dritte sauerstoffangereicherte Flüssigkeit und ein drittes Stickstoff-Kopfgas getrennt wird,
(e) eine argonhaltige Fraktion (68) aus dem Drei-Säulen-System in eine Rohargonsäule (70) eingeführt und dort in eine Rohargon-Kopffraktion und eine sauerstoffreiche Flüssigkeit getrennt wird,
(f) mindestens ein Teil (73) der Rohargon-Kopffraktion (71) in einen Rohargon-Kondensator (29) geleitet und dort durch indirekten Wärmeaustausch mit mindestens einem Teil (27) der zweiten sauerstoffangereicherten Flüssigkeit aus der Mitteldrucksäule (12) mindestens teilweise kondensiert wird,
(g) wobei die zweite sauerstoffangereicherte Flüssigkeit bei dem indirekten Wärmeaustausch im Rohargon-Kondensator (29) mindestens teilweise verdampft wird und bei der Verdampfung gebildeter sauerstoffangereicherter Dampf (32) in die Mitteldrucksäule (12) zurückgeleitet wird, und bei dem
(h) eine Fraktion (72) aus dem oberen Bereich der Rohargonsäule (70) und/oder ein Teil der Rohargon-Kopffraktion stromabwärts des Rohargon-Kondensators als Rohargon-Produkt gewonnen wird.

2. Verfahren nach Anspruch 1, bei dem der Rohargon-Kondensator als Fallfilmverdampfer ausgebildet ist, wobei die zweite sauerstoffangereicherte Flüssigkeit aus der Mitteldrucksäule (12) in dem Rohargon-Kondensator nur teilweise verdampft wird und das resultierende Zwei-Phasen-Gemisch (30) in eine Phasentrenneinrichtung (31) eingeleitet wird, in der der sauerstoffangereicherte Dampf (32) und ein flüssig verbliebener Anteil (33) voneinander getrennt werden, wobei der flüssig verbliebene Anteil (33) in die Niederdrucksäule (13) eingeleitet (34, 35) wird.

3. Verfahren nach 'einem der nach Anspruch 1 oder 2, bei dem ein zweiter Einsatzluftstrom (62, 75, 76, 676) verflüssigt und anschließend als Kühlfluid (78) für die Kondensation des zweiten Stickstoff-Kopfgases (36) aus der Mitteldrucksäule (12) eingesetzt wird.

4. Verfahren nach Anspruch 3, bei dem der zweite Einsatzluftstrom (676) stromaufwärts seiner Verwendung als Kühlfluid (678) arbeitsleistend entspannt (677) wird.

5. Verfahren nach einem der Ansprüche 1 bis 4, bei dem eine Flüssigkeit aus der Hochdrucksäule, insbesondere eine Flüssigkeit (575, 576, 775, 776) von einer Zwischenstelle der Hochdrucksäule (11), als Kühlfluid (578, 778) für die Kondensation des zweiten Stickstoff-Kopfgases (36) aus der Mitteldrucksäule (12) eingesetzt wird.

6. Verfahren nach einem der Ansprüche 1 bis 5, bei dem die Mitteldrucksäule (12) oberhalb der Zuspeisung der ersten sauerstoffangereicherten Fraktion (26) Stoffaustauschelemente im Umfang von mindestens sieben theoretischen Böden aufweist.

7. Verfahren nach einem der Ansprüche 1 bis 6, bei dem die Mitteldrucksäule (12) unterhalb der Zuspeisung der ersten sauerstoffangereicherten Fraktion (26) keine Stoffaustauschelemente oder Stoffaustauschelemente im Umfang von einem bis fünf theoretischen Böden aufweist.

8. Verfahren nach einem der Ansprüche 1 bis 7, bei dem eine Zusatzfraktion (786, 788), die eine andere Zusammensetzung als die erste sauerstoffangereicherten Fraktion (26) aufweist, aus der Hochdrucksäule (12) abgezogen (775, 776) und der Mitteldrucksäule (12) zugespeist wird.

9. Vorrichtung zur Argongewinnung mit einem Drei-Säulen-System zur Luftzerlegung, das eine Hochdrucksäule (11), eine Niederdrucksäule (13) und eine Mitteldrucksäule (12) aufweist, mit
(a) einer ersten Einsatzluft-Leitung (10, 64, 564) zur Einleitung eines ersten Einsatzluftstroms in die Hochdrucksäule (11),
(b) einer ersten Rohsauerstoff-Leitung (23, 24, 26) zur Einleitung einer ersten sauerstoffangereicherte Fraktion aus der Hochdrucksäule (11) in die Mitteldrucksäule (12),
(c) einer zweiten Rohsauerstoff-Leitung (33, 35) zur Einleitung einer zweiten sauerstoffangereicherten Fraktion aus der Hochdrucksäule und/oder aus der Mitteldrucksäule (12) in die Niederdrucksäule (13),
(d) einer Argonübergangs-Leitung (68) zur Einleitung einer argonhaltigen Fraktion (68) aus dem Drei-Säulen-System in eine Rohargonsäule (70),
(e) einem Rohargon-Kondensator (29) zur mindestens teilweisen Kondensation mindestens eines Teils (73) einer Rohargon-Kopffraktion (71) aus der Rohargonsäule (70) durch indirekten Wärmeaustausch mit einer sauerstoffangereicherten Flüssigkeit (27) aus der Mitteldrucksäule (12),
(f) einer Dampfrückleitung (32) zur Rückleitung von sauerstoffangereichertem Dampf (32) aus dem Rohargon-Kondensator (29) in die Mitteldrucksäule (12), und mit
(g) einer Rohargon-Produktleitung (73), die mit dem oberen Bereich der Rohargonsäule (70) und/oder dem Rohargon-Kondensator (29) verbunden ist.

10. Vorrichtung nach Anspruch 9, bei welcher der Rohargon-Kondensator (29) als Fallfilmverdampfer ausgebildet ist.

11. Vorrichtung nach Anspruch 9 oder 10, mit einem Mitteldrucksäulen-Kondensator (37), dessen Verflüssigungsraum mit dem oberen Bereich der Mitteldrucksäule (12) verbunden (36) ist und dessen Verdampfungsraum mit einer Zuleitung (78, 678, 778) für ein Kühlfluid verbunden ist, wobei die Zuleitung insbesondere mit einer zweiten Einsatzluft-Leitung (62, 75, 76, 676) und/oder mit der Hochdrucksäule (11) verbunden (575, 576, 775, 776) ist.

12. Vorrichtung nach einem der Ansprüche 9 bis 11, bei der die Zuleitung (678) durch eine Flüssigturbine (677) führt.

13. Vorrichtung nach einem der Ansprüche 9 bis 12, bei der die Mitteldrucksäule (12) oberhalb der Zuspeisung der ersten sauerstoffangereicherten Fraktion (26) Stoffaustauschelemente im Umfang von mindestens sieben theoretischen Böden aufweist und/oder dass die Mitteldrucksäule (12) unterhalb der Zuspeisung der ersten sauerstoffangereicherten Fraktion (26) keine Stoffaustauschelemente oder Stoffaustauschelemente im Umfang von einem bis fünf theoretischen Böden aufweist.

## Claims

1. Process for obtaining argon using a three-column system for the fractionation of air, which has a high-pressure column (11), a low-pressure column (13) and a medium-pressure column (12), in which process
(a) a first charge air stream (10, 64, 564) is introduced into the high-pressure column (11), where it is separated into a first oxygen-enriched liquid and a first nitrogen top gas,
(b) a first oxygen-enriched fraction (23, 24, 26) from the high-pressure column (11) is introduced into the medium-pressure column (12) where it is separated into a second oxygen-enriched liquid and a second nitrogen top gas.
(c) at least a part (36) of the second nitrogen top gas from the medium-pressure column (12) is at least partially condensed by indirect heat exchange (37) with a cooling fluid (78, 678, 778),
(d) a second oxygen-enriched fraction (33, 35) from the high-pressure column and/or from the medium-pressure column (12) is introduced into the low-pressure column (13), where it is separated into a third oxygen-enriched liquid and a third nitrogen top gas,
(e) an argon-containing fraction (68) from the three-column system is introduced into a crude argon column (70), where it is separated into a crude argon top fraction and an oxygen-rich liquid,
(f) at least a part (73) of the crude argon top fraction (71) is passed into a crude argon condenser (29), where it is at least partially condensed by indirect heat exchange with at least a part (27) of the second oxygen-enriched liquid from the medium-pressure column (12),
(g) the second oxygen-enriched liquid being at least partially evaporated during the indirect heat exchange in the crude argon condenser (29), and oxygen-enriched vapour (32) which is formed during the evaporation being returned to the medium-pressure column (12), and in which process
(h) a fraction (72) from the upper region of the crude argon column (70) and/or a part of the crude argon top fraction downstream of the crude argon condenser is obtained as crude argon product.

2. Process according to Claim 1, in which the crude argon condenser is designed as a falling-film evaporator, the second oxygen-enriched liquid from the medium-pressure column (12) being only partially evaporated in the crude argon condenser, and the resulting two-phase mixture (30) being introduced into a phase-separation device (31), in which the oxygen-enriched vapour (32) and a proportion (33) which has remained in liquid form are separated from one another, the proportion (33) which has remained in liquid form being introduced (34, 35) into the low―pressure column (13).

3. Process according to Claim 1 or 2, in which a second charge air stream (62, 75, 76, 676) is liquefied and is then used as cooling fluid (78) for the condensation of the second nitrogen top gas (36) from the medium-pressure column (12).

4. Process according to Claim 3, in which the second charge air stream (676) undergoes work-performing expansion (677) upstream of its use as cooling fluid (678).

5. Process according to one of Claims 1 to 4, in which a liquid from the high-pressure column, in particular a liquid (575, 576, 775, 776) from an intermediate point on the high-pressure column (11), is used as cooling fluid (578, 778) for the condensation of the second nitrogen top gas (36) from the medium-pressure column (12).

6. Process according to one of Claims 1 to 5, in which the medium-pressure column (12) has mass transfer elements amounting to at least seven theoretical plates above the feed for the first oxygen-enriched fraction (26).

7. Process according to one of Claims 1 to 6, in which the medium-pressure column (12) does not have any mass transfer elements, or have mass transfer elements amounting to from one to five theoretical plates, below the feed for the first oxygen-enriched fraction (26).

8. Process according to one of Claims 1 to 7, in which an additional fraction (786, 788), which has a different composition from the first oxygen-enriched fraction (26) is extracted (775, 776) from the high-pressure column (12) and is fed to the medium-pressure column (12).

9. Apparatus for obtaining argon, having a three-column system for the fractionation of air, which has a high-pressure column (11), a low-pressure column (13) and a medium-pressure column (12), having
(a) a first charge air line (10, 64, 564) for introducing a first charge air stream into the high-pressure column (11),
(b) a first crude oxygen line (23, 24, 26) for introducing a first oxygen-enriched fraction from the high-pressure column (11) into the medium-pressure column (12),
(c) a second crude oxygen line (33, 35) for introducing a second oxygen-enriched fraction from the high-pressure column and/or from the medium-pressure column (12) into the low-pressure column (13),
(d) an argon transfer line (68) for introducing an argon-containing fraction (68) from the three-column system into a crude argon column (70),
(e) a crude argon condenser (29) for the at least partial condensation of at least a part (73) of a crude argon top fraction (71) from the crude argon column (70) by indirect heat exchange with an oxygen-enriched liquid (27) from the medium-pressure column (12),
(f) a vapour return line (32) for returning oxygen-enriched vapour (32) from the crude argon condenser (29) to the medium-pressure column (12), and having
(g) a crude argon product line (73) which is connected to the upper region of the crude argon column (70) and/or the crude argon condenser (29).

10. Apparatus according to Claim 9, in which the crude argon condenser (29) is designed as a falling-film evaporator.

11. Apparatus according to Claim 9 or 10, having a medium-pressure column condenser (37), the liquid fraction space of which is connected (36) to the upper region of the medium-pressure column (12) and the evaporation space of which is connected to a feed line (78, 678, 778) for a cooling fluid, the feed line being connected (575, 576, 775, 776) in particular to a second charge air line (62, 75, 76, 676) and/or to the high-pressure column (11).

12. Apparatus according to one of Claims 9 to 11, in which the feed line (678) leads through a liquid turbine (677).

13. Apparatus according to one of Claims 9 to 12, in which the medium-pressure column (12) has mass transfer elements amounting to at least seven theoretical plates above the feed for the first oxygen-enriched fraction (26), and/or in that the medium-pressure column (12) does not have any mass transfer elements or has mass transfer elements amounting to from one to five theoretical plates below the feed for the first oxygen-enriched fraction (26).

## Revendications

1. Procédé pour la production d'argon dans un système à trois colonnes pour la décomposition d'air qui présente une colonne à haute pression (11), une colonne à basse pression (13) et une colonne à pression intermédiaire (12), dans lequel pour le procédé
(a) un premier flux d'air de fonctionnement (10, 64, 564) est introduit dans la colonne à haute pression (11) et de là est séparé en un premier fluide enrichi en oxygène et un premier gaz de tête d'azote,
(b) une première fraction enrichie en oxygène (23, 24, 26) est introduite depuis la colonne à haute pression (11) dans la colonne à pression intermédiaire (12) et de là est séparée en un deuxième fluide enrichi en oxygène et en un deuxième gaz de tête d'azote,
(c) au moins une partie (36) du deuxième gaz de tête d'azote est condensée au moins partiellement depuis la colonne à pression intermédiaire (12) au moyen d'un échangeur thermique indirect (37) avec un fluide de refroidissement (78, 678, 778),
(d) une seconde fraction enrichie en oxygène (33, 35) est introduite depuis la colonne à haute pression et/ou depuis la colonne à pression intermédiaire (12) dans la colonne à basse pression (13) et de là est séparée en un troisième fluide enrichi en oxygène et en un troisième gaz de tête d'azote,
(e) une fraction contenant de l'argon (68) est introduite à partir du système à trois colonnes dans une colonne d'argon pur (70) et de là est séparée en une fraction de tête d'argon pur et en un fluide riche en oxygène,
(f) au moins une partie (73) de la fraction de tête d'argon pur (71) est introduite dans un condensateur d'argon pur (29) et de là est condensée au moins partiellement au moyen d'un échangeur thermique indirect présentant au moins une partie (27) du deuxième fluide enrichi en oxygène à partir de la colonne à pression intermédiaire (12),
(g) dans lequel procédé le deuxième fluide enrichi en oxygène est évaporé au moins partiellement lors de l'échange thermique indirect dans le condensateur d'argon pur (29) et est de nouveau introduit lors de l'évaporation de la vapeur enrichie en oxygène (39) formée dans la colonne à pression intermédiaire (12), et pour lequel
(h) une fraction (72) est produite à partir d'un domaine supérieur de la colonne d'argon pur (70) et/ou une partie de la fraction de tête d'argon pur est produite en aval du flux du condensateur d'argon pur comme produit d'argon pur.

2. Procédé selon la revendication 1, pour lequel le condensateur d'argon pur est formé comme un évaporateur à couche mince pour lequel le deuxième fluide enrichi en oxygène n'est évaporé que partiellement à partir de la colonne à pression intermédiaire (12) dans le condensateur d'argon pur et le mélange des deux phases obtenues (30) est introduit dans un dispositif de séparation de phase (31), dans lequel dispositif la vapeur enrichie en oxygène (32) et une portion restant liquide (33) sont séparées l'une de l'autre, la portion restant liquide (33) étant introduite (34, 35) dans la colonne à basse pression (13).

3. Procédé selon l'une quelconque des revendications 1 ou 2, pour lequel un second flux d'air de fonctionnement (62, 75, 76, 676) est liquéfié et ensuite est utilisé comme fluide de refroidissement (78) pour la condensation du deuxième gaz de tête d'azote (36) à partir de la colonne à pression intermédiaire (12).

4. Procédé selon la revendication 3, pour lequel le second flux d'air de fonctionnement (676) est détendu (677) en amont de son utilisation comme fluide de refroidissement (678) de façon rentable.

5. Procédé selon l'une quelconque des revendications 1 à 4, pour lequel un fluide provenant de la colonne à haute pression notamment un fluide (575, 576, 775, 776) d'une position intermédiaire de la colonne à haute pression (11) est utilisé comme flux de refroidissement (578, 778) pour la condensation du deuxième gaz de tête d'azote (36) provenant de la colonne à pression intermédiaire (12).

6. Procédé selon l'une quelconque des revendications 1 à 5, pour lequel la colonne à pression intermédiaire (12) présente au-dessus de l'alimentation de la première fraction enrichie en oxygène (26) des éléments d'échange de substance dans un volume d'au moins sept plateaux théoriques.

7. Procédé selon l'une quelconque des revendications 1 à 6, pour lequel la colonne à pression intermédiaire (12) ne présente en dessous de l'alimentation de la première fraction enrichie en oxygène (26) aucun élément d'échange de substance ou présente des éléments d'échange de substance dans un volume de un à cinq plateaux théoriques.

8. Procédé selon l'une quelconque des revendications 1 à 7, pour lequel une fraction complémentaire (786, 788), qui présente une autre composition que la première fraction enrichie en oxygène (26) est extraite (775, 776) à partir de la colonne à haute pression (12) et alimente la colonne à pression intermédiaire (12).

9. Dispositif pour la production d'argon avec un système à trois colonnes pour la décomposition d'air qui présente une colonne à haute pression (11), une colonne à basse pression (13) et une colonne à pression intermédiaire (12), comprenant
(a) une première conduite d'air de fonctionnement (10, 64, 564) pour introduire un premier flux d'air de fonctionnement dans la colonne à haute pression (11),
(b) une première conduite d'oxygène pur (23, 24, 26) pour introduire une première fraction enrichie en oxygène à partir de la colonne à haute pression (11) dans la colonne à pression intermédiaire (12),
(c) une seconde conduite d'oxygène pur (33, 35) pour introduire une seconde fraction enrichie en oxygène à partir de la colonne à haute pression et/ou à partir de la colonne à pression intermédiaire (12) dans la colonne à basse pression (13),
(d) une conduite de transition d'argon (68) pour introduire une fraction contenant de l'argon (68) à partir du système à trois colonnes vers une colonne d'argon pur (70),
(e) un condensateur d'argon pur (29) pour la condensation au moins partielle d'au moins une partie (73) de la fraction de tête d'argon pur (71) à partir de la colonne d'argon pur (70) au moyen d'un échange thermique indirect avec un fluide enrichi en oxygène (27) depuis la colonne à pression intermédiaire (12),
(f) une conduite de retour de vapeur (32) pour renvoyer la vapeur enrichie en oxygène (32) à partir du condensateur d'argon pur (29) dans la colonne à pression intermédiaire (12), et comprenant
(g) une conduite de produit d'argon pur (73), qui est reliée avec le domaine supérieur de la colonne d'argon pur (70) et/ou avec le condensateur d'argon pur (29).

10. Dispositif selon la revendication 9, pour lequel le condensateur d'argon pur (29) est formé comme un évaporateur à couche mince.

11. Dispositif selon la revendication 9 ou 10 avec un condensateur de colonne à pression intermédiaire (37) dont la chambre de liquéfaction est reliée (36) avec le domaine supérieur de la colonne à pression intermédiaire (12) et dont la chambre d'évaporation est reliée avec une alimentation (78, 678, 778) pour un fluide de refroidissement, l'alimentation étant reliée (575, 576, 775, 776) notamment avec une seconde conduite d'air de fonctionnement (62, 75, 76, 676) et/ou avec la colonne à haute pression (11).

12. Dispositif selon l'une quelconque des revendications 9 à 11, dans lequel l'alimentation (678) conduit à travers une turbine de liquide (677).

13. Dispositif selon l'une quelconque des revendications 9 à 12, pour lequel la colonne à pression intermédiaire (12) présente au-dessus de l'alimentation de la première fraction enrichie en oxygène (26) des éléments d'échange de substance dans un volume d'au moins sept plateaux théoriques et/ou pour lequel la colonne à pression intermédiaire (12) ne présente en dessous de l'alimentation de la première fraction enrichie en oxygène (26) aucun élément d'échange de substance ou présente des éléments d'échange de substance dans un volume de un à cinq plateaux théoriques.
